# EUROPEAN PATENT SPECIFICATION

(11) **EP 3 556 646 B1**
(45) Date of publication and mention of the grant of the patent: **16.12.2020**
(21) Application number: 19169545.1
(22) Date of filing: 16.04.2019
(51) Int. Cl.: B62M 6/90, B62J 43/13, B62J 43/20, B62K 19/40

(54) **COUPLING BETWEEN AN ELECTRIC BATTERY AND AN ELECTRIC BICYCLE FRAME, ELECTRIC BICYCLE AND COUPLING PROCESS**
KUPPLUNG ZWISCHEN EINER ELEKTRISCHEN BATTERIE UND EINEM ELEKTRISCHEN FAHRRADRAHMEN, ELEKTRISCHES FAHRRAD UND KUPPLUNGSVERFAHREN
COUPLAGE ENTRE UNE BATTERIE ÉLECTRIQUE ET UN CADRE DE VÉLO ÉLECTRIQUE, VÉLO ÉLECTRIQUE ET PROCÉDÉ DE COUPLAGE

(30) Priority: 18.04.2018 ES 201830380
(43) Date of publication of application: 23.10.2019
(73) Proprietor: BH BIKES EUROPE, S.L., 01015 Vitoria, Alava (ES)
(72) Inventor: BEISTEGUI CHIRAPOZU, JOSE LUIS, 01015 Vitoria (ES); CUÑADO LANDA, JAVIER, 01015 Vitoria (ES)
(74) Representative: Plasseraud IP

(56) References cited:
- CN-U- 202 863 703
- DE-A1-102016 010 261
- JP-A- H09 104 379
- KR-A- 20150 127 976
- KR-A- 20150 128 014
- US-A1- 2013 241 170
- Anonymous: "Conical Wedge - Geometry Calculator", , 24 July 2019 (2019-07-24), XP055608374, Retrieved from the Internet: URL:https://rechneronline.de/pi/conical-we dge.php [retrieved on 2019-07-24]
- Anonymous: "Cone - Wikipedia", , 24 July 2019 (2019-07-24), XP055608378, Retrieved from the Internet: URL:https://en.m.wikipedia.org/wiki/Cone [retrieved on 2019-07-24]

## Description

### Technical field

The present invention is related to the structural formation of electric bicycles and, in particular, to the mounting of an electric battery for powering an actuating motor for the propulsion of these types of bicycles, proposing a coupling between an electric battery and an electric bicycle frame that improves the characteristics of electric bicycles.

### State of the art

The actuation of the propulsion of electric bicycles is done conventionally by means of an electric motor, which is powered for the operation thereof by an electric battery that is incorporated in the structural assembly of the bicycle, generally in the frame thereof.

Thus, one solution for incorporating the electric battery for powering the actuating motor for propulsion in electric bicycles is to attach the electric battery by any type of fastening in an external position on the bicycle frame, which has the drawback in that the electric battery is susceptible to easy manipulation and theft by third parties, as well as to the harmful influences of atmospheric elements.

To eliminate these types of drawbacks, solutions for integrating the electric battery inside one of the components of the bicycle frame have been developed, such as the embodiment proposed by document WO03/022671, which arranges an electric battery inside the diagonal tube of the bicycle frame, and thus the electric battery is protected and hidden, avoiding the drawbacks of the solutions of external arrangement of the electric battery on bicycles. However, in this solution, the arrangement of the electric battery consists of mounting it in a fixed manner inside the diagonal tube of the frame, which makes the dismounting and the substitution of the electric battery difficult in the case that it needs maintenance, and when the electric battery needs to be charged, it forces the user to take the entire bicycle to a place where there is a connection point for charging the battery. Furthermore, access to the electric battery is done through the bottom part of the diagonal tube of the frame, which makes it necessary to turn the bicycle upside down if one needs access to the electric battery, which can cause structural damage to the handlebars and bicycle seat in the process.

Document WO99/26837 proposes another solution for incorporating an electric battery inside the diagonal tube of the frame of a bicycle, arranging the electric battery inserted through the lower part of the diagonal tube of the frame that joins to the bottom bracket of the bicycle, in which the housing of the electric battery is closed by a cover that couples to the opening of the housing. This solution facilitates the removal of the electric battery to take it to a battery charging connection point in order to charge it, without the need to have to take the bicycle to the charging point, but it has a drawback in that to determine the housing of the battery it is necessary to move the mounting of the bottom bracket of the bicycle to a position above or below the area where the bars that make up the frame of the bicycle come together, and as such the bottom bracket has a mounting that has less resistance than that of a conventional bicycle, in addition to the necessary structural modification to the bicycle for said mounting.

To avoid the previously mentioned drawbacks, European patent EP 2913261, by the same holder as that of the present invention, proposed an electric bicycle frame comprising a diagonal tube with a housing defined on the inside thereof in which an electric battery assembly is inserted and in which the housing of the diagonal tube has an opening for insertion on the upper part thereof for the introduction of the electric battery assembly.

German patent DE 10 2013 108 313 proposes a solution in which there is also a housing in the bicycle frame for housing the battery, this housing having locking means.

Patent WO2015/039785 also contemplates a housing with a pivoting cover that has a lock, which in the operative position thereof is fixed to the frame of the bicycle. Chinese Utility Model CN2030 64153U also proposes a housing with a cover provided with locking means

KR 2015 0128014 A discloses the preambles of claims 1 and 7.

In conclusion, all of these solutions that propose a housing in the structure of the bicycle frame incorporate locking solutions for said housing, with a cover provided with locking means, which involves several different parts, a complex mounting, points where dirt builds up and maintenance problems.

### Object of the invention

In accordance with the present invention, a coupling between an electric battery and an electric bicycle frame is proposed, in which the electric battery is introduced in a housing defined in a diagonal tube of the electric bicycle frame, wherein the electric battery has on at least one of the two small faces thereof a conical shape in reciprocal correspondence to a conical shape that at least one of the two small faces of the housing has; such that by introducing the electric battery in the housing, the small faces with a conical shape come into reciprocal correspondence, establishing a dovetail coupling between the electric battery and the diagonal tube of the bicycle frame.

Furthermore, on the base of the battery and on the base of the housing of the diagonal tube of the bicycle frame that must be facing that base, there are means that allow a reciprocal coupling of a male-female type to be established, enabling the guided radial rotation of the electric battery with respect to the housing, said means able to be, for example, a cavity and a pivot able to be housed in said cavity.

With this solution of an inverted conical housing and configuration in correspondence with the battery, unlike current solutions, the vertical vibrations of the bicycle brought about from the daily use thereof are absorbed, preventing the battery from moving vertically and preventing connections from being lost. Thus, vertical adjustment problems of the battery are solved.

On the other hand, the way of inserting the battery from the side and fastening it by means of a rotation allows the top tube of the bicycle frame to be close to the diagonal tube, and the longitudinal dimension or height of the rotational pivot allows for the same. With this lateral mounting instead of a mounting with an upwards movement, as occurs in the majority of conventional solutions in which the battery is pulled from one end upwards, the risk of the battery hitting the top tube is eliminated.

It is essentially a mounting in which the space between the diagonal tube and the top tube of the bicycle frame is utilised in the best way possible.

With this mounting, the battery is safe from vertical movements, which are the most common movements a bicycle must with withstand when jumping, going over obstacles, etc. However, it is envisaged that the electric battery and the housing comprise attachment means that prevent the involuntary radial rotation of the electric battery once it is mounted in the housing, said attachment means being pins that project from the small faces of the electric battery and receptacles defined on the small faces of the housing, the pins being insertable in said receptacles.

Likewise, the invention also proposes an electrical bicycle that incorporates a coupling such as the one indicated.

Furthermore, the invention also proposes a coupling process between the electric battery and the corresponding diagonal tube of the bicycle frame, which comprises the following phases:
- the arrangement of the electric battery radially rotated with respect to the diagonal tube which will house the same.
- moving the electric battery close to the diagonal tube until the coupling means come into reciprocal correspondence.
- rotating the electric battery until it is aligned with the diagonal tube so that the small faces come into correspondence.
- fastening the electric battery in the mounting position thereof.

It is in this way that a coupling solution for the electric battery is achieved in a way that is very safe, does not require hooking elements or means or complementary locks, thereby highly simplifying the application thereof, which allows for a simple mounting and dismounting of the battery and which makes it possible for both the electric battery and the diagonal tube of the frame wherein the same is housed to have an outer surface that is uniform and continuous and which prevents the build-up of dirt.

### Description of the figures

Figure 1 is an elevation view of a bicycle frame in which an electric battery is mounted on a coupling of a diagonal tube of an electric bicycle frame, according to the object of the present invention.
Figure 2 is a view similar to that of Figure 1, wherein the bicycle frame does not have a top tube.
Figure 3 is a side view showing the electric battery and the diagonal tube of the frame without being coupled.
Figure 4 is a schematic upper plan view showing the electric battery rotated over the coupling of the diagonal tube once a pivot has entered into a cavity.
Figure 5 is a view similar to that of Figure 4, but with the electric battery in line with respect to the coupling of the diagonal tube.
Figure 6 is a view similar to that of Figure 3, but with the electric battery already coupled in the housing of the diagonal tube.
Figure 7 is a perspective view of the electric battery without being coupled in the diagonal tube, according to a practical variant embodiment.
Figure 8 is a view similar to that of Figure 7, with the electric battery rotated on the coupling of the diagonal tube, but wherein the pivot is already inserted in the cavity.
Figure 9 is a view similar to the two previous ones, but with the electric battery already correctly coupled in the diagonal tube.

### Detailed description of the invention

The present invention relates to the coupling of an electric battery (1) of an electric bicycle in a housing (2) of the corresponding tube of the frame of said bicycle, preferably a diagonal tube (3). The invention also relates to the bicycle itself, which has this coupling and to the process for carrying out this coupling.

The housing (2) is open on the large faces thereof and comprises a base (2.2) and two small faces (2.1). According to the present invention, at least one of the two opposite facing small faces (2.1) is configured with an inverted conical shape in the form of a half dovetail.

In turn, the electric battery (1) comprises a base (1.2) and two small lateral faces (1.1). In correspondence with the configuration of the housing (2), at least one of said small faces (1.1) has an inverted conical configuration.

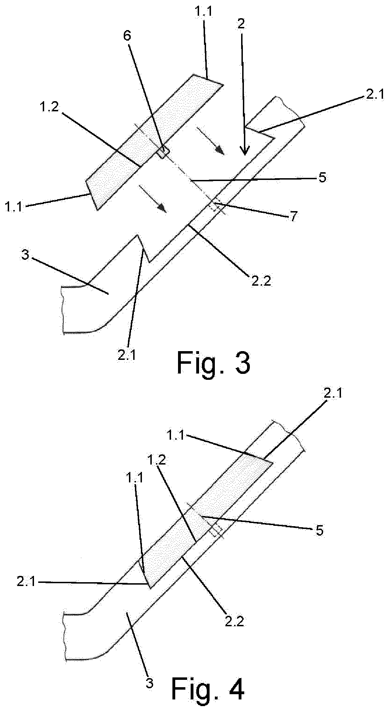

Figures 3 to 6 represent a non-limited practical exemplary embodiment, according to which the small faces (2.1) of the housing (2) have an inverted conical shape and, in reciprocity with this configuration, the two small faces (1.1) of the electric battery (1) also have the same inverted conical configuration, which, as will be described in greater detail below, allows for a dovetail coupling between the electric battery (1) and the small faces (2.1) of the housing (2) of the diagonal tube (3) of the electric bicycle.

On the base (1.2) of the electric battery (1) and on the base (2.2) of the housing (2) there are means that allow a male-female type reciprocal coupling to be established, enabling the guided radial rotation of the electric battery (1) with respect to the housing (2).

Preferably, and as can be seen in Figure 3, a central pivot (6) protrudes from the base (1.2) of the electric battery (1), while on the base (2.2) of the housing (2) there is a central cavity (7) in correspondence with said pivot (6).

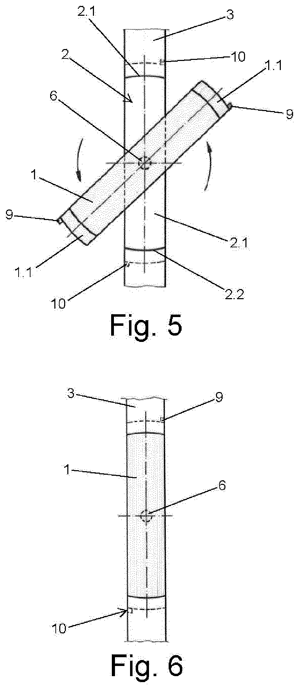

With the electric battery (1) arranged radially rotated with respect to the housing (2), as shown in Figure 4, it is possible to move the electric battery (1) close to the housing (2) of the diagonal tube (3) of the bicycle frame, until the pivot (6) penetrates the cavity (7). At this moment one can proceed by rotating the electric battery (1), as shown in Figure 4, such that the electric battery (1) radially rotates on an axis (5) until it is aligned with the diagonal tube (3), as shown in Figures 5 and 6. When reaching this position, the two small faces (1.1) of the electric battery (1) come into correspondence with the two small faces (2.1) of the housing (2), establishing a coupling between the electric battery (1) and the diagonal tube (3) that prevents the electric battery (1) from moving in the direction of the axis (5).

The electric battery (1) and the coupling (2) have attachment means that prevent the involuntary radial rotation of the electric battery (1) once it is coupled in the housing (2).

Preferably, said attachment means can be pins (9) that project from the small faces (1.1) of the electric battery (1) and receptacles (10) defined on the small faces (2.1) of the housing (2), the pins (9) being insertable into said receptacles (10). This way, when the electric battery (1) is mounted, as can be seen in Figure 5, the pins (9) penetrate the receptacles (10), establishing an attachment that prevents the involuntary radial movement of the electric battery (1) necessary for the dismounting thereof, unless the user acts on the electric battery (1), forcing it free from this attachment.

Likewise, instead of two pins (9) and two receptacles (10), it could be only one pin (9) and one receptacle (10) in correspondence with one another, as long as a sufficient radial retention is achieved of the electric battery (1) in the housing (2) thereof.

Furthermore, the attachment means could be any other elements that provide a conventional attachment, such as elements that bring about the attachment by means of elastic clips. For example, these alternative attachment means could be situated on the bases (1.2) and (2.2) of the electric battery (1) and of the housing (2), respectively, or on the pivot (6) and in the cavity (7) or in any other location that, by means of friction, elastic clips or a similar conventional solution, establishes the retention of the electric battery (1) in the housing (2).

It is envisaged that in addition to this attachment of the electric battery (1), the assembly of the coupling is provided with a conventional lock (not shown), so that when the bicycle is parked with the electric battery (1) mounted and the user is not near their bicycle, a third party cannot take out the electric battery (1) and steal it.

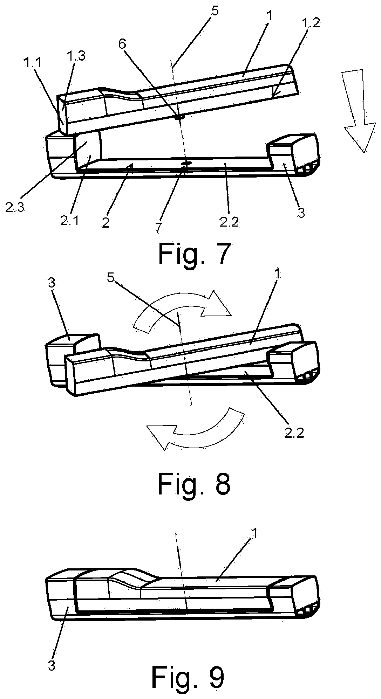

Likewise, Figures 3 to 6 show a practical exemplary embodiment, according to which the two small faces (1.1) of the electric battery (1) and the two small faces (2.1) of the housing (2) have an inverted conical shape to allow for a dovetail-type coupling. However, said inverted conical shape could be only on one of the small faces (1.1) and on the corresponding small face (2.1) thereof, as shown in Figures 7 to 9.

In this case, the coupling would be a half dovetail coupling. Moreover, as can be seen in Figure 7, it is envisaged that the entire surface of the small faces (1.1) and (2.1) does not have to have a conical shape, but rather the conical part can be combined with straight parts (1.3) and (2.3), or even with other configurations.

Figures 7 to 9 show how the mounting process of the electric battery (1) is done on the diagonal tube (3) of the bicycle frame. Thus, Figure 7 shows how the electric battery (1) is moved towards the diagonal tube (3), the electric battery (1) being rotated with respect to the diagonal tube (3). Figure 8 shows how once the pivot (6) has been inserted in the cavity (7), the electric battery (1) can rotate until reaching the arrangement of Figure 9, in which the electric battery (1) is aligned with the diagonal tube (3) and mounted in the housing (2) of said diagonal tube (3).

With this mounting, the electric battery (1) cannot come out of the housing (2) thereof in the direction of the axis (5), which is where the most significant stresses are produced by the jumps and vibrations of the bicycle, as well as by the obstacles it must go over, etc.

In Figure 7 one can also see how the electric battery (1) and the diagonal tube (3) are in perfect continuity, the outer surface being uniform and without gaps in which dirt could accumulate.

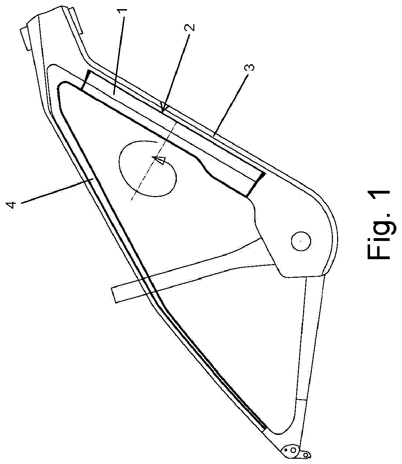

Figure 1 shows the electric battery (1) already mounted on the frame of a bicycle, to be able to see that due to the lateral mounting of the electric battery (1), the distance between the diagonal tube (3) and the top tube (4) of the bicycle frame can be minimum, without the risk of the electric battery (1) colliding with tube (4) in the mounting or dismounting of the electric battery (1). This separation would essentially only be limited by the length of the pivot (6).

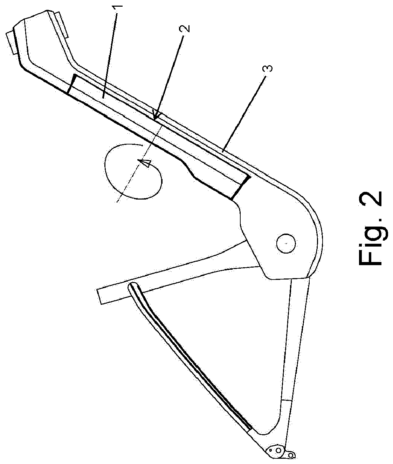

Figure 2 shows the electric battery (1) mounted on a bicycle frame that does not incorporate a top tube (4).

## Claims

1. A coupling between an electric battery (1) and an electric bicycle frame, the type of coupling in which the electric battery (1) is introduced in a housing (2) of a diagonal tube (3) of the electric bicycle frame,
**characterised in that** the electric battery (1) has on at least one of two small faces thereof (1.1) a conical in reciprocal correspondence to a conical shape that at least one of two small faces (2.1) of the housing (2) has,
such that by introducing the electric battery (1) in the housing (2), the small faces (1.1 and 2.1) with conical shape come into reciprocal correspondence, establishing a dovetail coupling between the electric battery (1) and the diagonal tube (3) of the bicycle frame housing the same.

2. The coupling between an electric battery (1) and an electric bicycle frame according to claim 1, wherein on a base (1.2) of the electric battery (1) and on a base (2.2) of the housing (2) there are means that allow a male-female type reciprocal coupling to be established, enabling the guided radial rotation of the electric battery (1) with respect to the housing (2).

3. The coupling between an electric battery (1) and an electric bicycle frame according to claim 2, wherein the means that allow a male-female type reciprocal coupling are a cavity (7) and a pivot (6) that can be housed in said cavity (7).

4. The coupling between an electric battery (1) and an electric bicycle frame according to any one of the preceding claims, wherein the electric battery (1) and the housing (2) comprise attachment means that prevent the involuntary radial rotation of the electric battery (1) once it is mounted in the housing (2).

5. The coupling between an electric battery (1) and an electric bicycle frame according to claim 4, wherein said attachment means are pins (9) that project from the small faces (1.1) of the electric battery (1) and receptacles (10) defined on the small faces (2.1) of the housing (2), the pins (9) being insertable into said receptacles (10).

6. An electric bicycle that incorporates a coupling between the electric battery (1) and the diagonal tube (3) of the electric bicycle frame according to any one of the preceding claims.

7. A process using the coupling between the electric battery (1) and the housing (2) of the corresponding diagonal tube (3) of the bicycle frame as defined in claim 1, **characterised in that** the following phases are carried out:
- the arrangement of the electric battery (1) radially rotated with respect to the diagonal tube (3) which will house the same.
- moving the electric battery (1) close to the diagonal tube (3) until a coupling means (6, 7) of the electric battery (1) and the housing (2) come into reciprocal correspondence.
- rotating the electric battery (1) until it is aligned with the diagonal tube (3) so that the two small faces (1.1) of the electric battery (1) and the two small faces (2.1) of the housing (2) come into correspondence.
- fastening the electric battery (1) in the mounting position thereof.

## Patentansprüche

1. Kopplung zwischen einer Elektrobatterie (1) und einem Elektrofahrradrahmen, wobei die Art von Kopplung derart ist, dass die Elektrobatterie (1) in ein Gehäuse (2) eines Unterrohrs (3) des Elektrofahrradrahmens eingesetzt wird,
**dadurch gekennzeichnet, dass** die Elektrobatterie (1) auf mindestens einer von zwei kleinen Flächen davon (1.1) eine konische Form in reziproker Entsprechung zu einer konischen Form hat, die mindestens eine von zwei kleinen Flächen (2.1) des Gehäuses (2) hat,
so dass durch Einsetzen der Elektrobatterie (1) im Gehäuse (2) die kleinen Flächen (1.1 und 2.1) mit konischer Form in reziproke Entsprechung kommen, was eine Schwalbenschwanzkopplung zwischen der Elektrobatterie (1) und dem sie aufnehmenden Unterrohr (3) des Fahrradrahmens herstellt.

2. Kopplung zwischen einer Elektrobatterie (1) und einem Elektrofahrradrahmen nach Anspruch 1, wobei auf einer Basis (1.2) der Elektrobatterie (1) und auf einer Basis (2.2) des Gehäuses (2) Einrichtungen vorhanden sind, durch die eine reziproke Steck-Aufnahme-Kopplung hergestellt werden kann, was die geführte Radialdrehung der Elektrobatterie (1) im Hinblick auf das Gehäuse (2) ermöglicht.

3. Kopplung zwischen einer Elektrobatterie (1) und einem Elektrofahrradrahmen nach Anspruch 2, wobei die Einrichtungen, die eine reziproke Steck-Aufnahme-Kopplung ermöglichen, ein Hohlraum (7) und ein Drehzapfen (6) sind, der im Hohlraum (7) aufgenommen werden kann.

4. Kopplung zwischen einer Elektrobatterie (1) und einem Elektrofahrradrahmen nach einem der vorstehenden Ansprüche, wobei die Elektrobatterie (1) und das Gehäuse (2) Befestigungseinrichtungen aufweisen, die die unbeabsichtigte Radialdrehung der Elektrobatterie (1) verhindern, sobald sie im Gehäuse (2) eingebaut ist.

5. Kopplung zwischen einer Elektrobatterie (1) und einem Elektrofahrradrahmen nach Anspruch 4, wobei die Befestigungseinrichtungen Stifte (9), die von den kleinen Flächen (1.1) der Elektrobatterie (1) vorstehen, und Aufnahmen (10) sind, die auf den kleinen Flächen (2.1) des Gehäuses (2) gebildet sind, wobei die Stifte (9) in die Aufnahmen (10) einführbar sind.

6. Elektrofahrrad, das eine Kopplung zwischen der Elektrobatterie (1) und dem Unterrohr (3) des Elektrofahrradrahmens nach einem der vorstehenden Ansprüche beinhaltet.

7. Verfahren, das die Kopplung zwischen der Elektrobatterie (1) und dem Gehäuse (2) des entsprechenden Unterrohrs (3) des Fahrradrahmens nach Anspruch 1 verwendet,
**dadurch gekennzeichnet, dass** die folgenden Phasen durchgeführt werden:
- die Anordnung der Elektrobatterie (1), die im Hinblick auf das Unterrohr (3) radial gedreht ist, das sie aufnehmen wird,
- Bewegen der Elektrobatterie (1) nahe zum Unterrohr (3), bis Koppeleinrichtungen (6, 7) der Elektrobatterie (1) und des Gehäuses (2) in reziproke Entsprechung kommen,
- Drehen der Elektrobatterie (1), bis sie zum Unterrohr (3) ausgerichtet ist, so dass die beiden kleinen Flächen (1.1) der Elektrobatterie (1) und die beiden kleinen Flächen (2.1) des Gehäuses (2) in Entsprechung kommen,
- Befestigen der Elektrobatterie (1) in ihrer Einbauposition.

## Revendications

1. Couplage entre une batterie électrique (1) et un cadre de vélo électrique, le type de couplage dans lequel la batterie électrique (1) est introduite dans un boîtier (2) d'un tube diagonal (3) du cadre de vélo électrique,
**caractérisé en ce que** la batterie électrique (1) a sur au moins une parmi deux petites faces de celle-ci (1.1) une forme conique en correspondance réciproque avec une forme conique qu'au moins une parmi deux petites faces (2.1) du boîtier (2) a,
de telle sorte qu'en introduisant la batterie électrique (1) dans le boîtier (2), les petites faces (1.1 et 2.1) avec une forme conique entrent en correspondance réciproque, établissant un couplage en queue d'aronde entre la batterie électrique (1) et le tube diagonal (3) du cadre de vélo abritant celle-ci.

2. Couplage entre une batterie électrique (1) et un cadre de vélo électrique selon la revendication 1, dans lequel sur une base (1.2) de la batterie électrique (1) et sur une base (2.2) du boîtier (2) il y a des moyens qui permettent à un couplage réciproque du type mâle/femelle d'être établi, facilitant la rotation radiale guidée de la batterie électrique (1) par rapport au boîtier (2).

3. Couplage entre une batterie électrique (1) et un cadre de vélo électrique selon la revendication 2, dans lequel les moyens qui permettent un couplage réciproque du type mâle/femelle sont une cavité (7) et un pivot (6) qui peut être abrité dans ladite cavité (7).

4. Couplage entre une batterie électrique (1) et un cadre de vélo électrique selon l'une quelconque des revendications précédentes, dans lequel la batterie électrique (1) et le boîtier (2) comprennent des moyens d'attache qui empêchent la rotation radiale involontaire de la batterie électrique (1) une fois qu'elle est montée dans le boîtier (2).

5. Couplage entre une batterie électrique (1) et un cadre de vélo électrique selon la revendication 4, dans lequel lesdits moyens d'attache sont des goupilles (9) qui font saillie à partir des petites faces (1.1) de la batterie électrique (1) et des récipients (10) définis sur les petites faces (2.1) du boîtier (2), les goupilles (9) pouvant être insérées dans lesdits récipients (10).

6. Vélo électrique qui incorpore un couplage entre la batterie électrique (1) et le tube diagonal (3) du cadre de vélo électrique selon l'une quelconque des revendications précédentes.

7. Procédé utilisant le couplage entre la batterie électrique (1) et le boîtier (2) du tube diagonal (3) correspondant du cadre de vélo tel que défini dans la revendication 1, **caractérisé en ce que** les phases suivantes sont mises en oeuvre :
- l'agencement de la batterie électrique (1) tournée radialement par rapport au tube diagonal (3) qui abritera celle-ci.
- le déplacement de la batterie électrique (1) près du tube diagonal (3) jusqu'à ce qu'un moyen de couplage (6, 7) de la batterie électrique (1) et du boîtier (2) entrent en correspondance réciproque.
- la rotation de la batterie électrique (1) jusqu'à ce qu'elle soit alignée sur le tube diagonal (3) de façon à ce que les deux petites faces (1.1) de la batterie électrique (1) et les deux petites faces (2.1) du boîtier (2) entrent en correspondance.
- la fixation de la batterie électrique (1) dans la position de montage de celle-ci.
